# EUROPÄISCHE PATENTSCHRIFT

(11) **EP 2 261 096 B1**
(45) Veröffentlichungstag und Bekanntmachung des Hinweises auf die Patenterteilung: **26.09.2012**
(21) Anmeldenummer: 10158119.7
(22) Anmeldetag: 29.03.2010
(51) Int. Cl.: B60W 40/08, B60K 28/06, B62D 6/00, F16H 61/02, B60W 40/09

(54) **Verfahren zur Fahreridentifikation in einem Fahrzeug**
Method for driver identification in a vehicle
Procédé destiné à l'identification du conducteur dans un véhicule

(30) Priorität: 09.06.2009 DE 102009026833
(43) Veröffentlichungstag der Anmeldung: 15.12.2010
(73) Patentinhaber: ZF Lenksysteme GmbH, 73527 Schwäbisch Gmünd (DE)
(72) Erfinder: Greul, Roland, 73547, Lorch (DE); Mehrjerdian, Eman, 73125, Bonn (DE)

(56) Entgegenhaltungen:
- WO-A1-2006/131257
- DE-A1- 3 941 999
- DE-A1-102004 038 009
- DE-A1-102005 043 496
- DE-A1-102006 039 682
- US-A- 5 557 521

## Beschreibung

Die Erfindung bezieht sich auf ein Verfahren zur Fahreridentifikation in einem Fahrzeug nach dem Oberbegriff des Anspruches 1.

In der DE 39 41 999 C2 wird ein Verfahren zum Ermitteln eines den Fahrstil eines Fahrers charakterisierenden Fahrerfaktors in einem Fahrzeug beschrieben. Hierzu wird die Betätigung des Gaspedals auf Lage- und Geschwindigkeitsebene untersucht, wobei aus einer Verknüpfung einer mittleren Gaspedalgeschwindigkeit, einer mittleren Gaspedalstellung und einer mittleren Abweichung der Gaspedalstellung von einem Sollwert unter Berücksichtigung von Gewichtungsfaktoren ein Fahrerfaktor berechnet wird. Der Fahrerfaktor wird zur Steuerung eines automatischen Getriebes herangezogen, indem das Schaltkennfeld des automatischen Getriebes unter Zugrundelegung des Fahrerfaktors an den jeweiligen Fahrertyp angepasst wird.

Mithilfe des in der DE 39 41 999 C2 beschriebenen Verfahrens ist es zwar möglich, Algorithmen in Fahrzeugkomponenten fahrerindividuell zu parametrieren. Dies erfolgt auf der Grundlage von Informationen über die Gaspedalbetätigung, ohne allerdings die jeweilige Ursache für die Betätigung des Gaspedals zu berücksichtigen. So wird beispielsweise die Gaspedalbetätigung im Falle eines Beschleunigungsvorganges auf einer Landstraße mit höherer Intensität und Geschwindigkeit erfolgen als im Stadtverkehr. Daher sind aus der Gaspedalbetätigung abgeleitete fahrerindividuelle Informationen immer situationsbezogen und beinhalten systembedingt eine gewisse Unsicherheit hinsichtlich des Fahrertyps.

Im US- Patent Nr. 5,557,521 wird ein Steuersystem für eine Getriebesteuerung offenbart, bei dem ein automatisches Gangwechseln vorgesehen ist, welches auf Grundlage von Fuzzy-Regeln eine Entscheidung für das Wechsleln in eine andere Gangstufe fällt. Die Fuzzy Regeln zur Bestimmung des Zeitpunktes des Gangwechsles berücksichtigen dabei physikalische Größen des Fahrzeugs, beispielsweise die Motordrehzahl und Größen die den Fahrstil des Fahrers charakterisieren, wobei die Gang-Wechsel-Charakteristik infolge einer kontinuierlichen Adaption des Fahrerstils vorgenommen wird.

Das Dokument US 5 557 521 ist als nächtliegender Stand der Technik zu sehen.

Der Erfindung liegt die Aufgabe zu Grunde, eine automatisch durchzuführende, fahrerindividuelle Einstellung einer Fahrzeugkomponente in einem Fahrzeug mit hoher Genauigkeit durchzuführen.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Fahreridentifikation wird eine das Verhalten des Fahrers charakterisierende Fahrerkenngröße ermittelt, die der Einstellung einer Fahrzeugkomponente zu Grunde gelegt wird, beispielsweise innerhalb eines Fahrerassistenzsystems oder die Einstellung einer einzelnen Fahrzeugkomponente wie zum Beispiel die Steuerung bzw. Regelung eines Getriebes. Zur Ermittlung der Fahrerkenngröße wird ein Stellglied im Fahrzeug, welches als aktive Komponente ausgeführt ist, in einer definierten Weise zur Simulation einer Standard- Fahrsituation betätigt und die Reaktion des Fahrers auf die Betätigung des Stellglieds ausgewertet. Die Fahrerkenngröße lässt sich aus der Reaktion des Fahrers ableiten, indem übliche und an sich bekannte Auswertemaßnahmen durchgeführt werden, beispielsweise eine Untersuchung des Frequenz- und/oder Amplitudenverlaufs der Fahrerreaktion und/oder statistische Untersuchungen. Die Fahrerkenngröße kann gemäß eines festgelegten Zusammenhangs aus den Fahrerreaktionen bzw. der Auswertung der Fahrerreaktion bestimmt werden. Der Zusammenhang ist beispielsweise in einer Datenbank abgelegt, die Daten verschiedener Fahrertypen enthält.

Im Unterschied zum Stand der Technik wird das Stellglied im Fahrzeug absichtlich und mit der Intention betätigt, eine Fahrerreaktion auszulösen, die anschließend untersucht werden kann. Diese Vorgehensweise hat den Vorteil, dass über die Betätigung des Stellglieds in einer definierten Weise standardisierte Situationen erzeugt werden, die zu einer auswertbaren Fahrerreaktion führen. Damit sind die Reaktionen verschiedener Fahrer in besserer Weise objektiv miteinander vergleichbar, so dass auch die darauf beruhende Fahrerklassifizierung mit höherer Genauigkeit erfolgt. Verschiedene Fahrertypen können auf diese Weise besser unterschieden werden.

Ein weiterer Vorteil des erfindungsgemäßen Verfahrens liegt darin, dass auf Grund der Steuerbarkeit der Stellgliedaktionen Fahrsituationen mit erhöhtem Gefährdungspotenzial vermieden werden können. Die Betätigung des Stellglieds erfolgt bevorzugt nur in Fahrsituationen, in denen in der Betätigung kein erhöhtes Gefährdungspotenzial liegt, also beispielsweise nur bei Fahrzeuggeschwindigkeiten unterhalb eines Schwellenwertes, nur im Geradeauslauf oder bei Lenkwinkeln unterhalb eines Schwellenwertes, nur im Falle von Längsbeschleunigungen unterhalb eines Schwellenwertes etc. Weiterhin kann durch die Verwendung einer erweiterten Sensorik auch die aktuelle Umfeldsituation berücksichtigt werden. Beispielsweise können mit Hilfe eines Kamerasystems Informationen zur Spurbreite und Position des Fahrzeugs innerhalb der Fahrspur berücksichtigt und somit eine Gefährdung vollständig ausgeschlossen werden.

Dadurch, dass durch die Betätigung eines Stellglieds eine Standard-Fahrsituation entsprechend einer realen Fahrsituation simuliert wird, beispielsweise das Überfahren einer Spurrille, Querfuge oder der Einfluss einer in Querrichtung am Fahrzeug angreifenden Windböe, können Fahrsituationen erzeugt werden, die besonders geeignet sind, eine verwertbare Fahrerreaktion hervorzurufen. Hierzu gehören insbesondere Eingriffe in die Querdynamik des Fahrzeugs, also eine Änderung des querdynamischen Fahrzustands auf Lage-, Geschwindigkeits- und/oder Beschleunigungsebene. So ist es insbesondere möglich, Da diese Fahrsituationen dem Fahrer aus dem realen Fahrbetrieb vertraut sind, werden gefährliche Überreaktionen vermieden. Zugleich werden aber Fahrerreaktionen ausgelöst, da der Fahrer bestrebt ist, die über die Betätigung des Stellglieds erzeugte Fahrzustandsänderung wieder auszugleichen; diese Fahrerreaktionen können ausgewertet und zur Fahreridentifikation herangezogen werden.

Aus der Regelstrategie des Fahrers in diesen herbeigeführten Situationen ist ein hoher Informationsgehalt hinsichtlich des Fahrertyps zu extrahieren. Es handelt sich hierbei um standardisierte bzw. quasi-standardisierte Fahrsituationen, die für eine Auswertung geeignet sind. Da die in realer Umwelt vorkommenden Ereignisse von der Art und Intensität der Ereignisse nie identisch sind bzw. ihr Auftreten nicht immer vorhanden oder ihre Detektion nicht ohne erweiterte Sensorik und nur mit hohem Aufwand möglich ist, können die Informationen zum Fahrertyp aus realen Fahrsituationen nicht mit hinreichender Verlässlichkeit ermittelt werden.

Der Eingriff in den Fahrzustand kann grundsätzlich über jedes Stellglied im Fahrzeug erfolgen. Gemäß bevorzugter Ausführung ist aber vorgesehen, dass ein Stellglied im Lenksystem des Fahrzeugs betätigt wird, beispielsweise eine elektrische Lenkkraftunterstützungseinrichtung, über die ein Zusatzlenkmoment in das Lenksystem eingespeist wird und die als Stellglied einen ansteuerbaren Elektromotor umfasst. Über den Elektromotor kann als auslösende Aktion ein Unterstützungsmoment erzeugt werden, welches beispielsweise das Überfahren der Spurrille, Querfuge oder das Erfassen der Windböe simuliert und zu einem Lenkwinkelausschlag des Fahrzeugs führt. Der Fahrer wird daraufhin eine angemessene Lenkreaktion ausführen, um das Fahrzeug wieder in die Sollspur zu bringen; diese Fahrerreaktion wird gemessen und ausgewertet, beispielsweise durch Untersuchen des Lenkradwinkels, der Lenkradwinkelgeschwindigkeit, des vom Fahrer aufgebrachten Lenkmoments am Lenkrad und/oder von den Fahrzuständen Gierrate und/oder Querbeschleunigung des Fahrzeugs.

Aus Sicherheitsgründen wird die vom Stellglied erzeugte Fahrzustandsänderung auf einen unkritischen Grenzwert beschränkt, um Fahrsituationen mit Gefährdungspotenzial auszuschließen.

Die Erzeugung eines unterstützenden Lenkmoments zur Erzeugung einer Fahrerreaktion kann auch mithilfe von Lenkkraftunterstützungseinrichtungen durchgeführt werden, die hydraulisch oder elektrohydraulisch ausgebildet sind, so weit diese Unterstützungseinrichtungen über ein ansteuerbares Stellglied verfügen.

Im Falle von aktiven Lenksystemen, die über ein Überlagerungsgetriebe zur Generierung eines Überlagerungslenkwinkels verfügen, wobei die Ansteuerung des Überlagerungslenkgetriebes mithilfe eines beispielsweise als Elektromotor ausgebildeten Stellglieds erfolgt, kann die Fahrzustandsänderung in der Querdynamik des Fahrzeugs auch über die gezielte Erzeugung eines Überlagerungslenkwinkels erfolgen. Hierbei bewegt sich das Lenkrad nicht zwangsläufig, so dass diese Fahrsituation dem Erfassen des Fahrzeugs durch eine Windböe entspricht, wohingegen das gezielte Einleiten eines Unterstützungsmoments und der dadurch hervorgerufene Lenkradausschlag vom Fahrer als Überfahren einer Querrille bzw. -fuge empfunden wird.

Weitere Eingriffsmöglichkeiten bestehen grundsätzlich im Antriebsstrang eines Fahrzeugs, beispielsweise durch Ansteuerung von aktiven Kupplungssystemen, in aktiven Fahrwerkssystemen einschließlich aktiver Dämpfer oder Stabilisatoren, in Bremssystemen oder in der Motorsteuerung.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, das mit einem Überlagerungslenkgetriebe zur Erzeugung eines Überlagerungslenkwinkels sowie mit einem elektrischen Servomotor zur Lenkkraftunterstützung ausgestattet ist,
- Fig. 2: ein Ablaufdiagramm mit den einzelnen Schritten zur Durchführung des Verfahrens zur Fahreridentifikation.

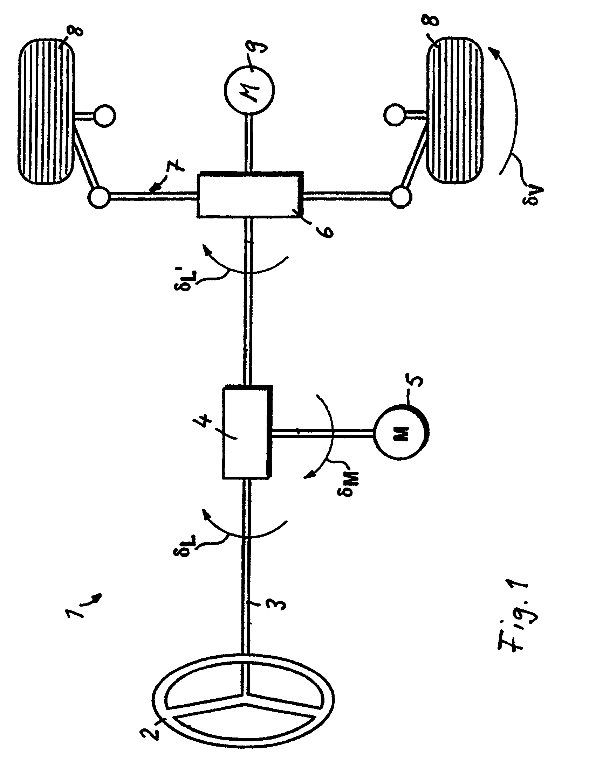

Bei dem in Fig. 1 dargestellten Lenksystem 1 handelt es sich um ein aktives Lenksystem, welches in Kraftfahrzeugen eingesetzt wird und als Lenkkomponenten ein Lenkrad 2, eine Lenkwelle 3, ein Überlagerungslenkgetriebe 4 mit zugeordnetem Stellmotor 5, ein Lenkgetriebe 6, ein Lenkgestänge 7 sowie eine Lenkkraftunterstützungseinrichtung 9 umfasst. Der Fahrer gibt über das Lenkrad 2 einen Lenkradwinkel δ*_{L}* vor, der über das Lenkgetriebe 6 und das Lenkgestänge 7 in einen Radlenkwinkel δ*_{V}* an den lenkbaren Vorderrädern 8 des Fahrzeugs umgesetzt wird. Über die als elektrischer Servomotor ausgeführte Lenkkraftunterstützungseinrichtung 9 kann in das Lenkgetriebe 6 ein Unterstützungsmoment eingespeist werden. Mithilfe des Überlagerungslenkgetriebes 4 und dem zugeordneten Stellmotor 5 kann ein Überlagerungslenkwinkel δ*_{M}* erzeugt werden, der zu dem Lenkradwinkel δ*_{L}*, der vom Fahrer vorgegeben wird, hinzuaddiert wird. Der resultierende Lenkwinkel δ*_{L}*, wird wie vorbeschrieben über das Lenkgetriebe 6 und das Lenkgestänge 7 in einen entsprechenden Radlenkwinkel δ*_{V}* umgesetzt.

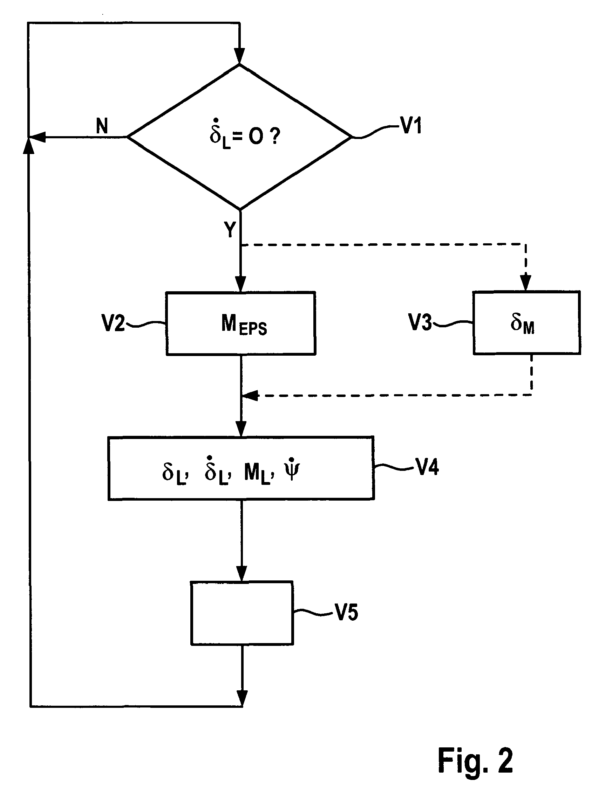

Wie dem Ablaufdiagramm zur Durchführung des Verfahrens gemäß Fig. 2 zu entnehmen, wird zunächst in einem ersten Verfahrensschritt V1 überprüft, ob das Fahrzeug sich aktuell in einer Fahrsituation befindet, die gefahrlos einen selbsttätig durchzuführenden Eingriff über ein Stellglied im Fahrzeug zum gezielten Provozieren einer Fahrerreaktion erlaubt. Exemplarisch ist dies im Verfahrensschritt V1 anhand einer Überprüfung der Lenkradwinkelgeschwindigkeit δ̇*_{L}* dargestellt. Für die Durchführung des Verfahrens muss die Abfrage gemäß Verfahrensschritt V1 ergeben, dass die Lenkradwinkelgeschwindigkeit δ̇*_{L}* gleich null ist oder zumindest nur einen kleinen Wert unterhalb eines Schwellenwerts einnimmt. Ist dies nicht der Fall, wird der nein-Verzweigung ("N") folgend wieder zum Beginn des Verfahrens zurückgekehrt und die Abfrage in zyklischen Abständen erneut durchlaufen.

Ergibt die Abfrage nach Verfahrensschritt V1, dass die Lenkradwinkelgeschwindigkeit δ̇*_{L}* einen hinreichend kleinen Wert einnimmt, so kann zur Durchführung des Verfahrens zur Fahreridentifikation und -klassifizierung ein Stellglied im Fahrzeug zur Beeinflussung des Fahrzustands betätigt werden. In diesem Fall wird der ja-Verzweigung ("Y") folgend zum nächsten Verfahrensschritt V2 fortgefahren, in welchem über den elektrischen Servomotor ein Zusatzmoment M_{EPS} aufgebracht wird, das in das Lenksystem eingespeist wird.

Alternativ oder zusätzlich zur Generierung des Zusatzmoments M_{EPS} kann auch das Überlagerungslenkgetriebe angesteuert und ein Überlagerungslenkwinkel δ*_{M}* gemäß Verfahrensschritt V3 erzeugt werden.

In beiden Fällen, also sowohl bei der Erzeugung eines Zusatzmoments M_{EPS} über den elektrischen Servomotor als auch bei der Generierung eines Überlagerungslenkwinkels δ*_{M}* über das Überlagerungslenkgetriebe, folgt die Änderung der Stellgröße einer vorgegebenen Funktion, beispielsweise einer rampen- bzw. dreieckförmigen Vorgabe des Zusatzmoments M_{EPS} oder eines entsprechenden Überlagerungslenkwinkels δ*_{M}.* Die Vorgabe kann in der Weise durchgeführt werden, dass eine bestimmte Fahrerreaktion provoziert wird, insbesondere ein Gegenlenken, das der selbsttätigen Auslenkung des Lenksystems entgegen gesetzt ist.

Im folgenden Verfahrensschritt V4 werden die Fahrerreaktionen gemessen bzw. ermittelt. Es handelt sich hierbei beispielsweise um den Lenkradwinkel δ*_{L}*, welcher vom Fahrer erzeugt wird, die Lenkradwinkelgeschwindigkeit δ̇*_{L}*, das Fahrerhandmoment M_{L}, die Gierrate ψ̇ und/oder die Querbeschleunigung a_{y}.

Im nächsten Verfahrensschritt V5 werden die Messgrößen bzw. auf sonstige Weise ermittelten Fahrerreaktionsgrößen einer zeitlichen und statistischen Auswertung unterzogen. In Betracht kommen beispielhaft die Auswertung des Zeitpunkts des ersten Maximalwerts, des Zeitpunkts des zweiten Maximalwerts, des Betrags bzw. der Amplitude des ersten Maximalwerts und des Betrags bzw. der Amplitude des zweiten Maximalwerts. Hieraus können Aussagen zur Reaktionszeit, Reaktionsstärke, Korrekturdauer, Ausregelstrategie etc. abgeleitet werden. Der Vergleich dieser Größen mit Referenzgrößen bietet die Möglichkeit, Rückschlüsse auf den Fahrertyp sowie ggf. auf den Fahrerzustand zu ziehen und eine entsprechende Kategorisierung bzw. Klassifizierung vorzunehmen, welche vorzugsweise den Parametereinstellungen in einem Fahrerassistenzsystem oder in einer einzelnen Fahrzeugkomponente zu Grunde gelegt werden.

Sind die ermittelten Fahrerreaktionsgrößen nicht eindeutig bzw. für eine eindeutige Klassifikation des Fahrers nicht hinreichend, wird der Prozess von Verfahrensschritt V1 beginnend erneut durchgeführt, bis mit hinreichender Sicherheit der Fahrertyp ermittelt ist.

Des Weiteren besteht die Möglichkeit, die aus der Fahrerreaktion ermittelten Größen zur Parametrierung eines globalen Fahrermodells zu verwenden, das eine Abbildung des Fahrerlenkverhaltens darstellt. Das Fahrermodell kann sowohl für die fahrertypadaptive Auslegung von Fahrerassistenzsystemen als auch nachträglich bei der Entwicklung dieser Systeme eingesetzt werden. Für diese Systeme müssen Fahrerparameter wie beispielsweise Fahrerverstärkungsfaktoren, Zeitkonstanten im Hinblick auf die Informationsaufnahme, Zeitkonstanten des neuromuskulären Systems, Verzögerungszeiten, Fahrereigenfrequenzen sowie weitere Größen ermittelt werden, die starken fahrerindividuellen Streuungen unterliegen. Diese Parameter können mit dem erfindungsgemäßen Verfahren mit hinreichender Genauigkeit bestimmt werden, so dass ggf. eine erweiterte Sensorik wie beispielsweise Kamerasysteme, mit denen ansonsten diese Parameter bestimmt werden, entfallen können. Die Identifikation der Parameter erfolgt aus dem Eingangs- und Ausgangsverhalten des Modells, welches mit der realen Fahrerreaktion abgeglichen wird.

### Bezugszeichenliste

- 1: Lenksystem
- 2: Lenkrad
- 3: Lenkwelle
- 4: Überlagerungslenkgetriebe
- 5: Stellmotor
- 6: Lenkgetriebe
- 7: Lenkgestänge
- 8: Vorderrad
- 9: Lenkkraftunterstützungseinrichtung

- δ*_{L}*: Lenkradwinkel
- δ̇*_{L}*: Lenkradwinkelgeschwindigkeit
- δ*_{M}*: Überlagerungslenkwinkel
- δ*_{V}*: Radlenkwinkel
- M_{L}: Fahrerhandmoment
- M_{EPS}: Zusatzmoment
- ψ̇: Gierrate

## Patentansprüche

1. Verfahren zur Fahreridentifikation, bei dem eine das Verhalten des Fahrers charakterisierende Fahrerkenngröße ermittelt wird, die der Einstellung einer Fahrzeugkomponente zugrunde gelegt wird,
**dadurch gekennzeichnet,**
**dass** ein Stellglied (4, 5, 9) im Fahrzeug in einer definierten Weise zur Simulation einer Standard-Fahrsituation betätigt und zur Ermittlung der charakterisierenden Fahrerkenngröße die Reaktion des Fahrers auf die Betätigung des Stellglieds (4, 5, 9) ausgewertet wird.

2. Verfahren nach Anspruch 1,
**dadurch gekennzeichnet,**
**dass** ein Stellglied (4, 5, 9) im Lenksystem des Fahrzeugs betätigt wird.

3. Verfahren nach Anspruch 2,
**dadurch gekennzeichnet,**
**dass** das Stellglied im Lenksystem eine elektrische Lenkkraftunterstützungseinrichtung (9) ist, über die ein Zusatzmoments (M_{EPS}) erzeugt wird.

4. Verfahren nach Anspruch 2 oder 3,
**dadurch gekennzeichnet,**
**dass** das Stellglied im Lenksystem ein Überlagerungslenkgetriebe (4, 5) ist, über das ein Überlagerungslenkwinkel (δ*_{M}*) erzeugt wird.

5. Verfahren nach einem der Ansprüche 2 bis 4,
**dadurch gekennzeichnet,**
**dass** durch Betätigen des Stellglieds (4, 5, 9) im Lenksystem ein Lenkmoment und/oder Lenkwinkel simuliert wird, beispielsweise das Überfahren einer Spurrille, Querfuge oder der Einfluss einer Windböe.

6. Verfahren nach einem der Ansprüche 1 bis 5,
**dadurch gekennzeichnet,**
**dass** ein Stellglied im Antriebsstrang des Fahrzeugs betätigt wird.

7. Verfahren nach einem der Ansprüche 1 bis 6,
**dadurch gekennzeichnet,**
**dass** ein Stellglied im Fahrwerk des Fahrzeugs betätigt wird.

8. Verfahren nach einem der Ansprüche 1 bis 7,
**dadurch gekennzeichnet,**
**dass** als charakterisierende Fahrerkenngröße der Lenkradwinkel (*δ_{L}*), die Lenkradwinkelgeschwindigkeit (*δ̇_{L}*), das vom Fahrer aufgebrachte Fahrerhandmoment (M_{L}), die Gierrate (*ψ̇*) und/oder die Querbeschleunigung (a_{y}) untersucht wird.

9. Verfahren nach einem der Ansprüche 1 bis 8,
**dadurch gekennzeichnet,**
**dass** die Amplitude der charakterisierenden Fahrerkenngröße ausgewertet wird.

10. Verfahren nach einem der Ansprüche 1 bis 9,
**dadurch gekennzeichnet,**
**dass** die Frequenz der charakterisierenden Fahrerkenngröße ausgewertet wird.

11. Verfahren nach einem der Ansprüche 1 bis 10,
**dadurch gekennzeichnet,**
**dass** bei mehrfacher Betätigung des Stellglieds die charakterisierenden Fahrerkenngrößen statistisch ausgewertet werden

12. Regel- bzw. Steuergerät zur Durchführung des Verfahrens nach einem der Ansprüche 1 bis 11.

13. Fahrzeugkomponente, insbesondere Lenksystem, mit einem Regel- bzw. Steuergerät nach Anspruch 12.

## Claims

1. Method for driver identification, in which a driver characteristic variable which characterizes the behaviour of the driver and on which the setting of a vehicle component is based is identified,
**characterized**
**in that** an actuator element (4, 5, 9) in the vehicle is activated in a defined fashion in order to simulate a standard driving situation, and in order to identify the characterizing driver characteristic variable the driver's reaction to the activation of the actuator element (4, 5, 9) is evaluated.

2. Method according to Claim 1,
**characterized**
**in that** an actuator element (4, 5, 9) in the steering system of the vehicle is activated.

3. Method according to Claim 2,
**characterized**
**in that** the actuator element in the steering system is an electric power steering device (9) by means of which an additional torque (M_{EPS}) is generated.

4. Method according to Claim 2 or 3,
**characterized**
**in that** the actuator element in the steering system is a superimposition steering gear (4, 5) by means of which a superimposition steering angle (*δ_{M}*) is generated.

5. Method according to one of Claims 2 to 4,
**characterized**
**in that** by activating the actuator element (4, 5, 9) in the steering system a steering torque and/or steering angle is simulated, for example travel over a rut, cross-joint or the influence of a gust of wind.

6. Method according to one of Claims 1 to 5,
**characterized**
**in that** an actuator element in the drive train of the vehicle is activated.

7. Method according to one of Claims 1 to 6,
**characterized**
**in that** an actuator element in the chassis of the vehicle is activated.

8. Method according to one of Claims 1 to 7,
**characterized**
**in that** the steering wheel angle (*δ_{L}*), the steering wheel angle speed (*δ̇_{L}*), the driver's manual torque (M_{L}) applied by the driver, the yaw rate (ψ̇) and/or the lateral acceleration (a_{y}) are examined as characterizing driver characteristic variable.

9. Method according to one of Claims 1 to 8,
**characterized**
**in that** the amplitude of the characterizing driver characteristic variable is evaluated.

10. Method according to one of Claims 1 to 9,
**characterized**
**in that** the frequency of the characterizing driver characteristic variable is evaluated.

11. Method according to one of Claims 1 to 10,
**characterized**
**in that** in the case of multiple activation of the actuator element the characterizing driver characteristic variables are evaluated statistically.

12. Closed-loop or open-loop control device for carrying out the method according to one of Claims 1 to 11.

13. Vehicle component, in particular steering system, having a closed-loop or open-loop control device according to Claim 12.

## Revendications

1. Procédé d'identification du conducteur, selon lequel une grandeur caractéristique de conducteur qui caractérise le comportement du conducteur est déterminée, laquelle sert de base pour le réglage d'un composant du véhicule,
**caractérisé en ce**
**qu'**un actionneur (4, 5, 9) est actionné dans le véhicule d'une manière définie pour simuler une situation de conduite standard et la réaction du conducteur à l'actionnement de l'actionneur (4, 5, 9) est interprétée pour déterminer la grandeur caractéristique de conducteur caractérisante.

2. Procédé selon la revendication 1, **caractérisé en ce qu'**un actionneur (4, 5, 9) dans le système de direction du véhicule est actionné.

3. Procédé selon la revendication 2, **caractérisé en ce que** l'actionneur dans le système de direction est un dispositif électrique d'assistance à la force de direction (9) par le biais duquel est généré un couple supplémentaire (M_{EPS}).

4. Procédé selon la revendication 2 ou 3, **caractérisé en ce que** l'actionneur dans le système de direction est un mécanisme de direction à superposition (4, 5) par le biais duquel est généré un angle de direction de superposition (δ_{M}).

5. Procédé selon l'une des revendications 2 à 4, **caractérisé en ce que** l'actionnement de l'actionneur (4, 5, 9) dans le système de direction permet de simuler un couple de direction et/ou un angle de direction, par exemple le passage sur une ornière, un joint transversal ou l'influence d'une bourrasque.

6. Procédé selon l'une des revendications 1 à 5, **caractérisé en ce qu'**un actionneur est actionné dans la chaîne de propulsion du véhicule.

7. Procédé selon l'une des revendications 1 à 6, **caractérisé en ce qu'**un actionneur est actionné dans le mécanisme de roulement du véhicule.

8. Procédé selon l'une des revendications 1 à 7, **caractérisé en ce que** la grandeur caractéristique de conducteur caractérisante vérifiée est l'angle de volant (δ_{L}), la vitesse angulaire du volant (δ̇_{L}), le couple manuel de conducteur (M_{L}) appliqué par le conducteur, le taux de lacet (*ψ̇*) et/ou l'accélération transversale (a_{y}).

9. Procédé selon l'une des revendications 1 à 8, **caractérisé en ce que** l'amplitude de la grandeur caractéristique de conducteur caractérisante est interprétée.

10. Procédé selon l'une des revendications 1 à 9, **caractérisé en ce que** la fréquence de la grandeur caractéristique de conducteur caractérisante est interprétée.

11. Procédé selon l'une des revendications 1 à 10, **caractérisé en ce que** si l'actionneur est actionné plusieurs fois, la grandeur caractéristique de conducteur caractérisante est interprétée de manière statistique.

12. Régulateur ou contrôleur pour mettre en oeuvre le procédé selon l'une des revendications 1 à 11.

13. Composants de véhicule, notamment système de direction, comprenant un régulateur ou un contrôleur selon la revendication 12.
